# FASCICULE DE BREVET EUROPEEN

(11) **EP 3 013 143 B1**
(45) Date de publication et mention de la délivrance du brevet: **12.12.2018**
(21) Numéro de dépôt: 14749885.1
(22) Date de dépôt: 26.06.2014
(51) Int. Cl.: A01M 99/00, A01M 29/34, E04D 13/076

(54) **DISPOSITIF D'OBTURATION DES RÉSERVOIRS D'EAU STAGNANTE**
VORRICHTUNG ZUR ABDICHTUNG VON TANKS FÜR STEHENDES WASSER
DEVICE FOR SEALING STAGNANT WATER TANKS

(30) Priorité: 28.06.2013 FR 1356285
(43) Date de publication de la demande: 04.05.2016
(73) Titulaire: Suviri, Thierry, 98809 Mont Dore (NC); Put, Christophe, 98809 Mont Dore (NC)
(72) Inventeur: Suviri, Thierry, 98809 Mont Dore (NC); Put, Christophe, 98809 Mont Dore (NC)
(74) Mandataire: Aquinov
(86) Numéro de dépôt international: PCT/FR2014/051620
(87) Numéro de publication internationale: WO 2014/207390

(56) Documents cités:
- DE-A1- 10 037 986
- TW-U- M 318 030
- US-A1- 2005 178 072
- US-A1- 2009 249 704
- DATABASE WPI Week 201015 Thomson Scientific, London, GB; AN 2010-A47599 XP002720850, -& BR PI0 801 631 A (FRANCO DA E F A) 24 novembre 2009 (2009-11-24)

## Description

La présente invention appartient au domaine des moyens de prévention des maladies transmises par les insectes et plus particulièrement à celui des dispositifs et méthodes réduisant la prolifération des larves aquatiques, de moustiques notamment.

Elle a pour objet un dispositif de lutte contre la prolifération des larves aquatiques dans les réceptacles susceptibles de retenir de l'eau stagnante, grâce auquel les insectes n'ont plus accès à ces réservoirs d'eau. L'invention concerne également des méthodes de mise en oeuvre d'un tel dispositif.

On sait que les moustiques tiennent un rôle extrêmement important en santé humaine ou animale car ils concentrent, au-delà de leur rôle de nuisants par les piqûres qu'ils infligent, le plus important groupe de vecteurs d'agents pathogènes transmissibles à l'être humain.

Les moustiques sont responsables de la transmission du paludisme, une des toutes premières causes de mortalité humaine (chaque année, entre 250 et 600 millions de personnes touchées dans le monde, et plus d'un million de morts), et de nombreuses maladies à virus telles que la dengue, la fièvre jaune, la fièvre de la vallée du Rift, la fièvre du Nil occidental (West Nile Virus), le chikungunya, ainsi que d'encéphalites virales diverses et de filarioses.

Ils sont présents dans des milieux très divers sur l'ensemble des terres émergées de la planète (à l'exception de l'Antarctique) dès qu'une surface d'eau douce ou saumâtre, même réduite ou temporaire, est disponible. Soixante cinq espèces sont référencées en France métropolitaine et les départements touchés par le moustique tigre, vecteur potentiel de plusieurs maladies, sont chaque année plus nombreux. En Océanie, et notamment en Nouvelle Calédonie, les moustiques sévissent généralement entre décembre et avril (voire toute l'année) et peuvent transmettre la dengue, et depuis peu, aussi le chikungunya. En milieu urbain, le principal vecteur est *Aedes aegypti,* inféodé à l'homme, de moeurs essentiellement diurnes. Ses gîtes de ponte habituels sont de petites collections artificielles d'eau rencontrées autour des habitations (sous pots, récipients pour boutures, vases, pneus, gouttières...). Les épidémies se succèdent de façon plus ou moins rapprochée, comme le montrent les données publiées par l'Institut Pasteur de Nouvelle Calédonie.

L'eau est absolument nécessaire au développement du moustique. Quarante-huit heures après la prise du repas de sang, les femelles fécondées déposent leurs oeufs dans l'eau. Ces oeufs se développent en un à deux jours et donnent naissance à des larves aquatiques.

Les gîtes larvaires sont très diversifiés : eaux courantes ou stagnantes, permanentes ou temporaires, qu'elles soient ensoleillées (chemin) ou ombragées (en forêt), de grande dimension (lac, fleuve) ou de petite taille (feuille morte). Les gîtes naturels peuvent être formés par des végétaux (aisselle de feuille, trou d'arbre, champignon creux, feuilles tombées à terre, fruit creux), des minéraux (flaques, ornières, coquille d'escargot, trou de rocher). Les gîtes artificiels quant à eux sont tous les endroits constituant un récipient humide : citernes, abreuvoirs, gouttières, pneus, carcasses de voiture, bâches, boîtes de conserve, pots de fleurs, etc.

L'homme cherche depuis longtemps à lutter contre ce fléau, cause de démangeaisons et vecteur de maladies. Il existe différentes méthodes de lutte à grande échelle parmi lesquelles l'épandage de produits dans les zones fortement infestées ou l'aménagement du territoire pour limiter les gîtes de ponte : drainage, collecte des eaux usées, élimination des décharges sauvages et des stockages à ciel ouvert. On peut recourir également à des méthodes de lutte biologique en protégeant ou en restaurant les populations de prédateurs des larves de moustiques, tels que les grenouilles, crapauds, salamandres, hirondelles, chauve-souris ...

Dans les zones urbaines, ces méthodes n'étant pas toujours appropriées, le moyen le plus simple pour éviter d'être envahi par les moustiques consiste à éliminer au maximum les réservoirs potentiels d'eau stagnante, même de faible volume, où des moustiques pourraient pondre et des larves se développer. Ainsi les autorités sanitaires recommandent une surveillance de l'environnement proche des habitations et la suppression des récipients susceptibles de collecter de l'eau (soucoupes de pots de fleur, vases, bidons, bâches, gouttières, poubelles à ciel ouvert, brouettes...).

Cependant, les moyens de lutte préconisés contre la prolifération des gîtes larvaires sont contraignants à plusieurs niveaux. Ils ont un effet limité dans le temps et la surveillance impose que des actions soient répétées régulièrement (au moins à chaque nouvelle averse) : vider les dessous de pots, veiller à maintenir les abords des habitations nettoyés, entretenir les jardins, renverser tous les récipients susceptibles de retenir de l'eau. D'une part, la perte de temps finit par être dissuasive, et d'autre part, la moindre absence de quelques jours peut réduire à néant une saison d'effort.

En ce qui concerne le nettoyage des gouttières et des chéneaux, des difficultés pratiques s'ajoutent encore à ces contraintes : accessibilité, nécessité d'une échelle, risque de chute... En outre, les occupants des habitations n'ayant pas un accès visuel direct au contenu des gouttières et chenaux, ils ne sont pas incités à en opérer le curage. Les végétaux forment alors des amas créant des poches d'eau stagnante, paradis des larves.

Enfin, les collections d'eau qui ne peuvent pas être supprimées pour des raisons pratiques (puits de relevage, ...) doivent malgré tout être traitées régulièrement avec des produits chimiques.

Finalement toutes les méthodes préconisées reposent, soit sur la destruction des larves, soit sur l'élimination des points d'eau stagnante. L'invention ci-après décrite a pour objectif de résoudre les problèmes susmentionnés en mettant en oeuvre une solution reposant sur un principe différent. Il s'agit d'empêcher les insectes femelles d'accéder à ces réservoirs d'eau stagnante à l'aide d'un dispositif conçu pour les obturer, sans toutefois limiter la circulation de l'eau lorsqu'elle est nécessaire. On remédie ainsi à la ponte des oeufs d'anophèles dans ces réservoirs, d'une façon permanente et sans employer des produits chimiques susceptibles d'avoir un impact néfaste sur l'environnement.

Le document US 2005/0178072 A1 divulgue un dispositif à base d'un matériau poreux conformé pour occuper l'espace du réservoir qui, de ce fait, n'est plus librement accessible aux moustiques. Lorsqu'il pleut ou qu'un flux est déversé, l'eau pénètre dans la porosité du matériau, sans offrir de surface libre attractive pour la ponte. L'eau présente dans la porosité peut ensuite s'évaporer ou bien s'écouler par gravitation. Elle peut alors rester au fond du réceptacle celui-ci étant obturé par le dispositif poreux, ou s'écouler si une évacuation basse est prévue dans ledit réservoir. On voit donc que ce dispositif peut être utilisé dans des cas de figure très variés de zones creuses susceptibles de constituer des réservoirs d'eau stagnante, qu'ils existent naturellement ou du fait des activités humaines.

Il est bien évident également que si la lutte contre les moustiques est la préoccupation majeure, le dispositif peut être employé pour priver tout type d'insectes de gîtes larvaires et plus généralement pour empêcher d'autres animaux d'utiliser les réceptacles d'eau pour leur développement.

L'invention selon la revendication 1 a pour objet un dispositif de lutte contre la prolifération des larves aquatiques dans les réceptacles susceptibles de retenir de l'eau stagnante, lesdits réceptacles comportant une paroi délimitant une cavité et une ouverture béante, dispositif qui comprend un élément dont la forme est apte à épouser en totalité ou en partie celle de la paroi de ladite cavité et à obturer ladite ouverture, ledit élément étant réalisé en un matériau perméable à l'air et à l'eau comprenant un granulat de caoutchouc et un liant synthétique.

On désigne par réceptacle toute zone présentant une partie creuse dans laquelle de l'eau peut s'accumuler, même en quantité minime, pour constituer un gîte larvaire. Ce réceptacle, qu'il soit naturel ou artificiel (dans le sens qu'il est fabriqué ou construit par l'homme) comportera une partie réceptrice retenant l'eau, délimitée par une paroi, et une partie ouverte par laquelle l'eau se déverse dans l'espace intérieur du réceptacle, délimitée par la bordure supérieure de la paroi du réceptacle. L'eau s'écoulant par gravité, il est entendu que l'ouverture béante se situe en général en partie haute du réceptacle, bien qu'à une profondeur plus ou moins grande de la bordure supérieure du réceptacle, en tous cas au-dessus de l'espace où l'eau s'accumule. Il est également précisé que les réceptacles aptes à constituer des gîtes larvaires étant très divers dans leur forme, leurs dimensions et même leur texture, les définitions ci-dessus doivent être comprises dans leurs fonctions plus que dans leur structure géométrique au sens strict. De même, il est entendu que sous le vocable "eau", on désigne tout effluent liquide stagnant susceptible de servir de gîte larvaire, quelles que soient sa composition précise et sa pureté.

Le dispositif selon l'invention est conformé de manière à obturer l'accès au réservoir. Ce faisant il peut remplir celui-ci en totalité ou seulement partiellement, comme on le verra en détail plus loin. Il comprend essentiellement (ou uniquement dans certains modes de réalisation) un élément perméable à l'eau et à l'air. Il ne fait donc pas office de bouchon, mais au contraire de filtre. Il permet ainsi au réceptacle de continuer à jouer son rôle en particulier lorsque l'eau doit circuler. Par exemple, l'eau de pluie pourra s'écouler dans les gouttières et les chéneaux ou à travers le regard d'une canalisation. Il laisse également passer l'air, ce qui est important également pour équilibrer les pressions de part et d'autre de l'élément et aussi pour éviter les phénomènes de pourrissement.

Différents matériaux peuvent être utilisés pour réaliser l'élément. Cependant, compte tenu de l'utilisation de celui-ci, certaines exigences doivent être respectées. Le matériau doit être rigide et apte à adopter des formes diverses, il doit être imputrescible et résister aux variations climatiques. De manière avantageuse dans le dispositif selon l'invention, ledit matériau est un agglomérat à porosité ouverte, constitué de particules d'élastomère liées par une résine polyuréthane. Toutefois d'autres types de granulats, rigides ou souples, peuvent être utilisés, notamment des granulés obtenus par recyclage de polymères. On peut citer par exemple les granulats de PVC (polychlorure de vinyle) obtenus par refonte de récipients, bouteilles d'eau, ou autre.

Un élastomère est un polymère présentant des propriétés élastiques, obtenues après réticulation. Le terme de "caoutchouc" est un synonyme usuel d'élastomère. Les matériaux élastomères tels les pneumatiques sont souvent à base de caoutchouc naturel et de caoutchouc synthétique. Les granulats de caoutchouc utilisés dans la présente invention sont généralement obtenus par broyage des pneumatiques usagés, ce qui en fait une matière première bon marché et permet de contribuer au recyclage des déchets. Les particules de caoutchouc sont fixées à l'aide d'un liant, le tout formant un agglomérat poreux. Les particules de caoutchouc sont suffisamment espacées et le liant peu invasif, pour que des interstices ou pores se forment entre les particules. La structure et la composition de l'agglomérat sont choisies de telle sorte que les pores constituent un réseau dans toute la masse de l'agglomérat, créant ainsi une porosité ouverte traversant l'élément poreux dans toute son épaisseur.

Le liant est un composé de synthèse qui peut être choisi parmi les nombreux polymères disponibles auprès des fabricants, à partir du cahier des charges défini, et au regard des spécifications fournies par les fabricants. Par exemple, on peut utiliser pour la présente invention du polyuréthane. C'est un polymère bien connu dont la résistance mécanique permet une utilisation relativement polyvalente. Il est le polymère le plus couramment utilisé pour fabriquer des mousses et trouve de nombreuses applications dans le secteur du bâtiment et de l'ameublement, ainsi que dans l'industrie automobile et nautique. Les mousses de polyuréthane se sont également imposées dans la réalisation de revêtements de sols sportifs, où elles peuvent remplacer les granulats de caoutchouc : elles permettent d'atteindre des valeurs d'amortissement des chocs plus ou moins élevées en fonction de leur épaisseur.

Selon la présente invention, on utilise le polyuréthane en tant que liant, pour obtenir un agglomérat poreux, à porosité ouverte. Dans ce cadre, de préférence, le liant est une résine polyuréthane apportée à raison de 5 % à 20 % en masse rapportée au granulat de caoutchouc. De préférence, il est apporté à hauteur de 15 % par rapport à la masse de caoutchouc. La quantité de liant est donc relativement faible. Elle est choisie de manière à obtenir un réseau de pores ouverts assez important pour assurer un passage rapide de l'eau à travers le matériau, tout en assurant une cohésion satisfaisante de l'agglomérat. Pour certaines applications, on pourra choisir la valeur haute de la teneur en liant (voire la dépasser) pour accroître la résistance mécanique de l'élément, mais au détriment de la perméabilité. Le choix de la teneur en liant de l'agglomérat sera donc le résultat d'un compromis optimal dans la fourchette préconisée, qui est adaptée à l'usage prévu pour la présente invention. Dans tous les cas on veillera à préserver une perméabilité totale au dispositif.

Dans le même objectif, il sera possible de jouer également sur la granulométrie des particules de caoutchouc. Selon une caractéristique préférée du dispositif objet de la présente invention, le granulat est constitué de particules de caoutchouc dont la taille va de 1 mm à plusieurs mm, par exemple jusqu'à 20 mm. Le choix du meilleur granulat sera fait en fonction des objectifs particuliers recherchés et de la priorité qu'on accorde à chacun d'eux, d'une part en termes de résistance, durabilité, vieillissement, rigidité, facilité de mise en oeuvre, et d'autre part en terme de perméabilité (la vitesse d'écoulement des eaux à travers le matériau n'étant pas toujours le premier critère comme pour les applications aux pots de fleurs par exemple), tout en recherchant bien entendu l'interdiction d'accès aux larves.

On pourra se référer au coefficient de perméabilité K de la Loi de DARCY qui exprime le débit de fluide filtrant au travers d'un milieu poreux, en choisissant sa valeur la plus favorable pour l'invention, car outre la destruction des gîtes larvaires, le présent procédé doit assurer le drainage de l'eau. Les essais expérimentaux réalisés ont montré qu'en augmentant la taille des granulats issus du broyage des pneus usagés (par exemple en passant à une taille 8-12 mm), le coefficient K est vingt fois supérieur à celui des revêtements de sols amortissants. En effet, ce qui est recherché ici c'est que le matériau absorbe et draine la plus grande quantité de fluide et interdise l'accès aux moustiques, tandis que les agglomérats caoutchouc + résine destinés aux revêtements de sols doivent répondre à des normes amortissantes, ce qui n'a aucun intérêt dans l'application visée par la présente invention. Avantageusement, on utilisera une qualité de granulat totalement dépourvu de particules métalliques.

L'agglomérat est obtenu en mélangeant le granulat de caoutchouc avec le liant, pour obtenir un mélange malléable, qui prend en quelques heures. Il est donc tout à fait indiqué pour réaliser des éléments selon l'invention, selon des formes souhaitées. On pourra en particulier réaliser des éléments de conformation et de dimensions prédéfinies, par moulage. Ces éléments préformés pourront ensuite être placés dans des réceptacles susceptibles de constituer des gîtes larvaires. On peut également préparer le mélange de granulat de caoutchouc et de liant, de manière extemporanée, et le placer dans ou sur le gîte larvaire potentiel où il figera sur place.

Ainsi, dans un mode de réalisation du dispositif selon l'invention, l'élément poreux est préformé selon une forme apte à épouser en totalité la paroi de ladite cavité, de manière à obturer entièrement ledit réceptacle. Ce mode d'exécution de l'invention est adapté par exemple pour les pots de fleurs posés sur une coupelle laquelle est destinée à retenir l'eau d'arrosage excédentaire. L'espace laissé entre le pot et la coupelle constitue un réceptacle annulaire propice à la ponte des moustiques. On peut dans ce cas placer un élément annulaire préformé, ajusté aux dimensions du pot et de sa coupelle. Lors de l'arrosage de la plante (ou durant une averse) la porosité de l'élément absorbera une quantité d'eau, laquelle pourra ensuite être réabsorbée par la plante par capillarité ou s'évaporera, mais l'excédent se déversera et s'écoulera selon la pente du sol vers le réseau de collecte pluvial. On relève qu'il n'est pas impératif que le format de l'élément poreux soit exactement celui du pot et de sa coupelle, l'essentiel étant qu'aucune surface d'eau ne soit accessible aux anophèles.

Dans un autre mode de réalisation du dispositif selon l'invention, l'élément est préformé selon une forme apte à épouser en partie la paroi de ladite cavité, au moins un évidemment traversant étant ménagé dans la partie inférieure de l'élément de sorte à favoriser la circulation de l'eau collectée après qu'elle a traversé ledit élément. Ce mode de réalisation vise à permettre un écoulement rapide de l'eau ayant traversé la porosité, ce qui est particulièrement utile lorsqu'on a une convergence de flux liquides. C'est le cas notamment des gouttières équipant le bord des toitures, ou des caniveaux. Il est intéressant d'avoir un élément qui s'insère entre les parois latérales de la gouttière mais laisse un canal d'évacuation libre à sa base. De manière pratique, on utilisera un bloc s'étendant longitudinalement en épousant la forme de la gouttière, et dont la partie inférieure comporte une rainure longitudinale. On placera plusieurs blocs côte à côte successivement pour équiper toute la longueur de la gouttière. A noter que des accessoires pour gouttières existent (de type grilles, filets,...) mais ne permettent que la rétention des végétaux, donc, ils ne sont d'aucune utilité pour la lutte contre les gîtes larvaires. Ils ont en outre une durée de vie plus courte.

De manière générale, il est entendu que l'élément du dispositif selon l'invention peut être formé d'un seul tenant ou de plusieurs pièces séparées reformant ensemble l'élément quand elles sont mises en place. Elles peuvent être préformées séparément, ou bien d'un seul bloc qui est découpé en plusieurs pièces au moment de la mise en place. Il est alors plus facile d'introduire le dispositif dans une cavité dont l'ouverture est étroite. Il est aussi plus facile de transporter et d'installer plusieurs pièces de taille modérée, qui formeront un dispositif protecteur de grande taille une fois assemblées. L'assemblage peut se faire de toutes les manières commodes, par superposition ou par juxtaposition. Il est également prévu, pour les regards pluviaux en particulier, d'insérer deux pièces superposées dans l'ouverture, puis de les faire coulisser l'une sur l'autre pour étendre la surface d'emprise jusqu'à fermer le regard.

Dans un autre mode de réalisation du dispositif selon l'invention, l'élément est préformé selon une forme apte à épouser en partie la paroi de ladite cavité et à coopérer avec des moyens de support dont la paroi de la cavité est dotée de manière à ménager au fond du réceptacle un espace collecteur recevant l'eau après qu'elle a traversé ledit élément. Ce mode de réalisation convient particulièrement aux bacs collecteurs des descentes de gouttières, aux regards des canalisations domestiques, ou aux avaloirs des routes. Ce sont en général des cuves bétonnées de section rectangulaire, recevant les eaux par le haut, et pourvues d'une sortie d'évacuation à proximité de leur base. Il est fréquent que le fond de ces bacs ne soit pas bien régulier et en outre à un niveau inférieur à l'évacuation. Des flaques d'eau s'y forment donc aisément et y persistent. On peut prévoir selon l'invention de réaliser un bloc de même section rectangulaire que le bac qu'il doit équiper, qu'on va glisser dans le bac jusqu'à arriver en butée contre un organe de support. Le bloc peut avantageusement être muni d'une poignée permettant sa manipulation.

Comme indiqué plus haut, on peut de manière alternative modeler un élément poreux sur place. Dans ce cas, on peut couler le mélange de granulat et de liant directement dans la cavité du réceptacle susceptible d'attirer les moustiques. Toutefois, on préfèrera un mode de réalisation préservant le caractère amovible de l'élément poreux. C'est pourquoi, selon l'invention, il est proposé de déposer le mélange sur une grille de maintien. Dans ce cas, la grille (ou treillis) peut être surélevée, ce qui favorise l'écoulement rapide des eaux au-dessous du dispositif. Cette grille laisse également s'écouler le liant en excès, le cas échéant, lors du coulage du mélange de granulat et de liant, assurant ainsi la formation d'une porosité ouverte parfaitement perméable.

Ainsi, selon l'invention le dispositif peut comprendre un treillis fixé à la paroi de la cavité ou à proximité de celle-ci et un élément appliqué à la surface dudit treillis et s'étendant jusqu'à la paroi de ladite cavité de sorte à en obturer l'ouverture.

L'élément poreux est en pratique obtenu à partir du mélange de granulat et de liant qui est pâteux, et qu'on étale sur le treillis, à l'aide d'un outil approprié, en couche continue dont l'épaisseur peut être plus ou moins importante. Dans ce cas, avantageusement selon l'invention, l'élément obtenu après quelques heures est une couche continue d'agglomérat poreux à porosité ouverte, d'épaisseur variable, comprise entre 1 cm et 4 cm. Ce mode de réalisation présente l'avantage d'un ajustement parfait à des conformations irrégulières des réceptacles. Il permet de fermer les extrémités des gouttières par exemple, ou de relier deux éléments préformés, par exemple lorsqu'ils forment un angle entre eux. Il ne nécessite que peu de matériau et est donc particulièrement léger.

Le treillis peut être fixé à la paroi de la cavité, ou bien à proximité et à l'extérieur de celle-ci, par différents moyens à la disposition de l'homme du métier qui saura les choisir à bon escient. On choisit de préférence un treillis en matériau assez souple pour être adapté à l'aide d'un simple outil manuel à la conformation voulue, mais assez rigide pour soutenir l'élément poreux, y compris lorsque celui-ci est gorgé d'eau. En outre, le maillage doit être adapté à retenir le granulat avant la prise en masse de l'agglomérat. Ainsi, selon l'invention, ledit treillis peut être un grillage en métal (de préférence en acier galvanisé, ou en acier inoxydable), en matière plastique ou en toile textile, comportant des mailles de 3 mm à 8 mm, de préférence de 5 mm. On note que les mailles du treillis peuvent avoir une taille supérieure à celle des particules du granulat. Toutefois, il a été constaté que celui-ci avait tendance à rester aggloméré même avant la prise du matériau.

Quel que soit le mode de réalisation choisi, le dispositif selon l'invention peut incorporer d'autres organes, assurant des fonctions connexes. Il peut notamment être muni de moyens pour maintenir en place l'élément poreux, tels qu'agrafes, pattes ou crochets de maintien en position dans la cavité, ... De même, il peut comporter des moyens assurant sa préhension, de type poignée, crochet, anneau, etc., qui peuvent être assujettis à l'élément par divers moyens. Ils peuvent par exemple être arrimés à une armature noyée dans l'agglomérat, celle-ci assurant par ailleurs sa fonction de renfort interne et de rigidificateur du dispositif. On peut également recourir à des moyens de renfort externes, sous la forme par exemple d'un cerclage de l'élément. Ainsi, dans tous les modes de réalisation susmentionnés du dispositif objet de l'invention, ledit élément peut comprendre un ou plusieurs des moyens suivants :
- des moyens pour le maintenir en place,
- des moyens de préhension,
- une armature de renfort interne,
- des moyens de renfort externes.

Les tests réalisés ont montré que le dispositif réalisé selon les modalités indiquées ci-dessus assure une perméabilité satisfaisante et stable à long terme du fait de la porosité du granulat, et assure un amalgame de cohésion souhaitée.

Comme indiqué précédemment, le dispositif objet de l'invention est adapté à éliminer une grande variété de gîtes larvaires potentiels. Il peut être préfabriqué lorsque ces gîtes ont une dimension standard ou au moins connue, ou bien installé sur place. Les procédés par lesquels on procède à cette lutte contre la ponte dans les réservoirs d'eau sont originaux en eux-mêmes. C'est pourquoi est également objet de la présente invention un procédé de lutte contre la prolifération des larves aquatiques, de moustiques ou autre, dans les réceptacles susceptibles de retenir de l'eau stagnante, mettant en oeuvre un des dispositifs tels que décrits précédemment.

En particulier, est objet de l'invention un procédé selon la revendication 12 de lutte contre la prolifération des larves aquatiques dans les réceptacles susceptibles de retenir de l'eau stagnante lesdits réceptacles comportant une paroi délimitant une cavité et une ouverture béante, comprenant les étapes consistant à :
- préparer un mélange d'un granulat de caoutchouc et d'un liant synthétique,
- couler ledit mélange dans un moule de conformation souhaitée, identique en totalité ou en partie à celle de la paroi de ladite cavité, pour obtenir après démoulage un élément en matériau perméable à l'air et à l'eau comme décrit précédemment, dont la forme épouse en totalité ou en partie celle de la paroi de ladite cavité et obture ladite ouverture, et
- placer ledit élément dans ledit réceptacle.

Dans une variante intéressante, on place une toile absorbante au fond du moule avant de couler le mélange, pour capter le liant qui risque de s'accumuler au fond du moule et de former un couche imperméable. On démoule l'élément avant la prise complète du liant. Il est alors facile de séparer la toile de l'élément qui n'est pas tout à fait sec. Une toile géotextile, telle que celles utilisées en génie civil pour stabiliser les ouvrages en créant une barrière physique perméable (souvent appelée Bidim™), s'est avérée posséder les propriétés absorbantes requises. Elle est retirée par arrachement d'un simple geste, après séchage partiel de l'élément.

Pour ce procédé, on peut réaliser un moule de forme identique aux supports destinataires (réceptacles) les plus répandus, par exemple une portion de gouttière. Ce moule est utilisé comme un gabarit dans lequel est fabriqué en série le dispositif.

Selon un mode alternatif de réalisation, le procédé selon la revendication 13 de lutte contre la prolifération des larves aquatiques dans les réceptacles susceptibles de retenir de l'eau stagnante, lesdits réceptacles comportant une paroi délimitant une cavité et une ouverture béante, peut comprendre les étapes consistant à :
- préparer un mélange d'un granulat de caoutchouc et d'un liant synthétique,
- fixer un treillis à la paroi de la cavité ou débordant à proximité de celle-ci,
- appliquer une couche continue dudit mélange sur le treillis jusqu'à la paroi de ladite cavité ou débordant à proximité, pour obtenir un élément en matériau perméable à l'air et à l'eau à la surface dudit treillis obturant l'ouverture de ladite cavité, tel que décrit précédemment.

Les deux procédés ci-dessus permettent d'utiliser un agglomérat à base de granulats de caoutchouc recyclés et de résine polyuréthane, pour former, non pas un bouchon mais une barrière hermétique aux insectes mais perméable à l'air et à l'eau. De la sorte, on empêche les insectes femelles d'accéder à ces réservoirs d'eau stagnante et ceci d'une façon permanente.

L'installation du dispositif est très facile et ne nécessite pas d'outillage particulier autre que celui usuellement employé par les artisans. Une fois posé, l'élément poreux peut être laissé en place ou retiré à volonté pour une opération d'entretien et replacé. Sa durée de vie est du même ordre que celle de son support.

La fabrication en série peut être faite sans difficulté, mais il est également très commode pour un simple artisan de fabriquer les éléments dont il a besoin pour un chantier donné. Il peut préparer des éléments standards à l'avance, et réaliser les finitions sur place comme décrit plus haut. Le matériau est en outre léger et se découpe sans difficulté, par exemple à l'aide d'un cutter ou à la scie manuelle pour un ajustement optimal. Il utilise en grande partie des matériaux recyclés, qui pourront à leur tour être réutilisés.

Les domaines d'application préférentiels seront les gouttières, chéneaux, regards, caniveaux, dessous de pots, jardinières, vasques, et plus généralement tous récipients extérieurs pouvant contenir ou retenir de l'eau.

De manière inattendue, un autre domaine d'application est apparu intéressant pour le dispositif objet de la présente invention. En effet, comme évoqué plus haut, il fait fonction de filtre vis-à-vis de l'eau et de l'air, et non de bouchon. Ce faisant, il s'est avérée qu'il avait également une action utile pour réduire les pollutions malodorantes, issues notamment des fosses septiques dont l'ouverture est souvent à l'air libre. L'insertion d'un dispositif dans cette ouverture, très simple et ne demandant pas de travaux de maçonnerie, est apparue très efficace pour réduire et même éliminer totalement les émanations gênantes.

La présente invention sera mieux comprise grâce à la description qui va être faite de variantes de réalisation en relation avec les figures annexées, dans lesquelles :
La fig.1 est une vue schématique en coupe d'un chéneau équipé d'un dispositif préformé selon l'invention.
La fig. 2 est une vue schématique en coupe d'un pot et de son dessous de pot équipés d'un dispositif préformé selon l'invention.
La fig. 3 est une vue schématique en coupe d'un regard d'évacuation équipé d'un dispositif préformé selon l'invention.
La fig. 4 est une vue schématique en perspective d'une gouttière équipée d'un dispositif réalisé sur place selon l'invention.

### EXEMPLE 1 : Chéneau équipé d'un dispositif préformé

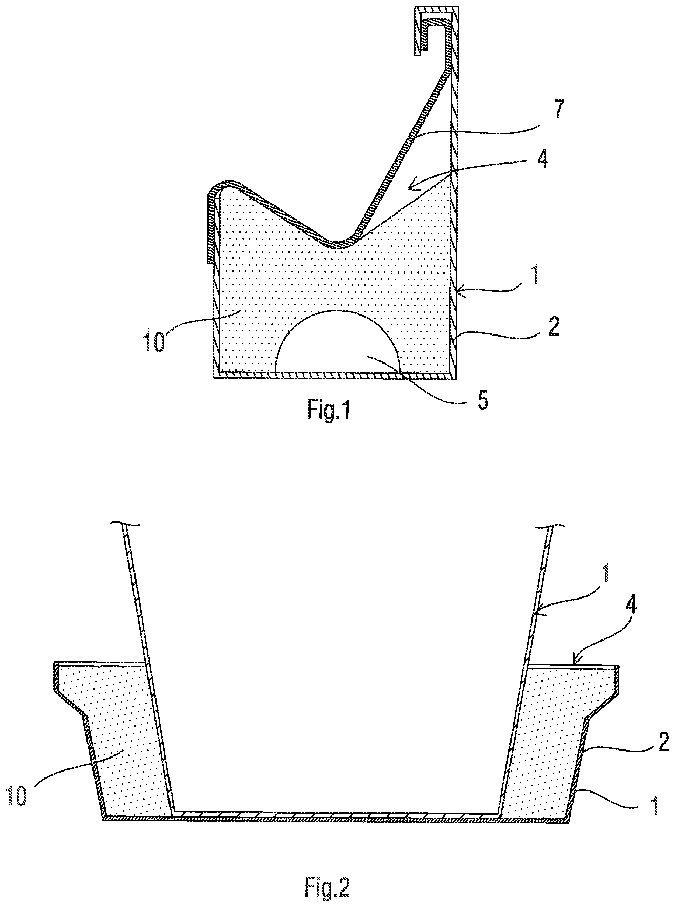

Sur la fig.1, on a représenté une vue schématique en coupe d'un chéneau 1 équipé d'un dispositif préformé 10. Le chéneau comporte les parois 2 latérales et fond, et l'ouverture béante 4. Il est occupé par l'élément poreux 10 préformé selon la forme d'un bloc long épousant les parois latérales du chéneau. L'élément comporte l'évidemment 5 traversant longitudinalement la partie inférieure de l'élément bloc 10. L'eau collectée à partir de l'ouverture 4 et ayant traversé l'élément 10 peut s'écouler librement vers le tuyau de descente. La géométrie de l'élément 10 est prévue de sorte à s'insérer sous la patte de fixation 7 de la gouttière à la toiture. Ceci présente l'avantage de ne pas avoir à modifier les systèmes de fixation des gouttières communément utilisés. La patte peut en outre jouer un rôle de maintien en place dudit élément 10.

L'élément est constitué d'un agglomérat composé d'un granulat de caoutchouc (particules d'environ 5 mm) et d'un liant en polyuréthane (composé de polyisocyanates aromatiques, par exemple distribué par la société SNAD sous la référence STOBIELAST s131.98), avec pour 1 kg de granulat, 150 g de liant. Après malaxage dans un malaxeur à axe vertical, le mélange est coulé dans un chéneau pris comme gabarit et laissé durcir pendant 24 heures environ, à température ambiante (la durée utile étant variable selon la température et l'humidité de l'air). Les éléments ainsi obtenus ont une masse de 3,5 kg par mètre linéaire, ce qu'un chéneau peut aisément supporter s'il est correctement arrimé.

### EXEMPLE 2 : Pot et de son dessous de pot équipés d'un dispositif préformé

Sur la fig. 2, on a représenté une vue schématique en coupe d'un pot et de son dessous de pot équipés d'un dispositif préformé. L'espace laissé entre le pot et la coupelle constitue un réceptacle 1 annulaire propice à la ponte des moustiques. On y a placé l'élément annulaire 10 préformé, ajusté aux dimensions du pot et de sa coupelle. L'agglomérat poreux a été préalablement moulé à la forme du pot et du dessous de pot de manière à occuper la hauteur totale du dessous de pot vide, ceci afin de ne pas laisser d'eau libre accessible.

L'élément 10 est composé d'un granulat de caoutchouc (particules d'environ 5 mm) et d'un liant en polyuréthane (composé de polyisocyanates aromatiques, par exemple distribué par la société SNAD sous la référence STOBIELAST S131.98), avec pour 1 kg de granulat, 180 g de liant. Après malaxage, le mélange est coulé dans un gabarit et laissé durcir pendant 24 heures environ, à température ambiante. Les éléments ainsi obtenus ont une moindre porosité mais une meilleure résistance, caractéristiques adaptées à leur usage (pas d'écoulement d'eau à grand débit mais risque d'écrasement de l'élément annulaire entre le pot et sa coupelle).

### EXEMPLE 3 : Regard d'évacuation équipé d'un dispositif préformé

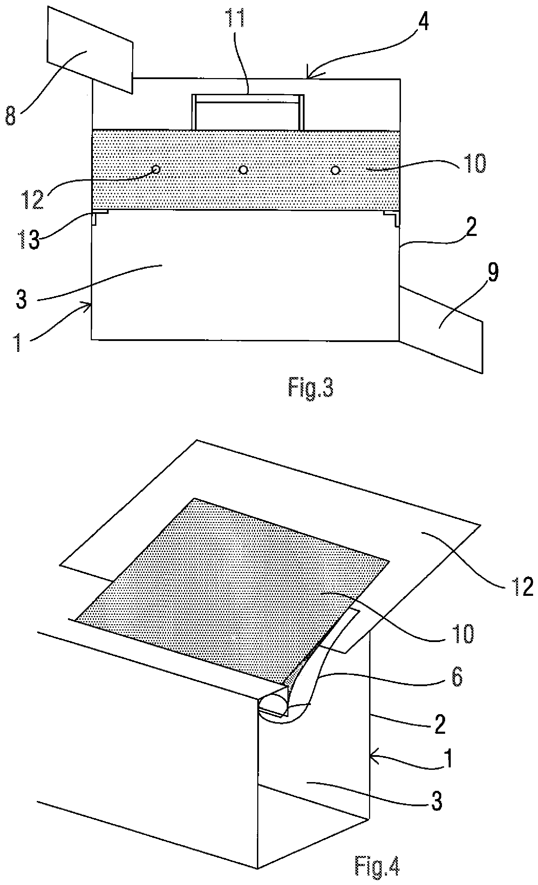

Sur la fig. 3, on a représenté une vue schématique en coupe d'un regard d'évacuation équipé d'un dispositif préformé. Le regard est une cuve bétonnée de section rectangulaire, recevant les eaux par le conduit haut 8, et pourvue d'une sortie d'évacuation 9 à proximité de sa base. L'élément 10 est un bloc de même section rectangulaire que la cuve qu'il équipe. Il repose en butée sur les cornières 13, à environ mi hauteur, de sorte que l'eau est collectée dans la partie supérieure, filtrée à travers l'élément 10 et s'écoule en partie inférieure vers l'évacuation 9. La poignée facilite l'insertion et le retrait du dispositif. Elle est assujettie aux éléments d'armature 12 métallique (de type fer à béton) renforçant l'agglomérat de caoutchouc.

Ce dispositif permet d'empêcher les feuilles et autres végétaux d'encombrer les regards et caniveaux. Il empêche les détritus d'entrer dans le regard (et dans les caniveaux) et également il empêche les nuisibles (rats, blattes, scolopendres....) d'en sortir. En général, ce type de dispositif rend plus accessible les regards et les caniveaux et en facilite le nettoyage. On ajoute que son épaisseur participe à réduire les odeurs nauséabondes.

L'élément 10 est composé d'un granulat de caoutchouc (particules d'environ 5 mm) et d'un liant en polyuréthane (par exemple le produit STOBIELAST S131.98 de SNAD), avec pour 1 kg de granulat, 120 g de liant. Après malaxage, le mélange est coulé dans un gabarit, les armatures et la poignée sont placées, et le tout est laissé à durcir pendant 24 heures environ, à température ambiante. Les éléments ainsi obtenus ont une forte porosité avec une résistance moyenne, caractéristiques adaptées à leur usage (écoulement d'eau à grand débit mais peu de risque de détérioration de l'élément protégé par la cuve).

### EXEMPLE 4 : Gouttière équipée d'un dispositif réalisé sur place

Lorsqu'il n'est pas possible de réaliser l'invention par une fabrication préalable (du fait de formes de gouttières ou de toitures particulières), ou par choix du client, une variante est réalisable *in situ* : une armature légère de type grillage complète le système. Sur la fig. 4, on a représenté une vue schématique en perspective d'une gouttière équipée d'un dispositif réalisé sur place. Le dispositif comprend le treillis 6 fixé à la paroi 2 de la gouttière 3 et à proximité de celle-ci en bas de la toiture 12, et l'élément 10 appliqué à la surface du treillis 6 et s'étendant jusqu'à la paroi 2 de la gouttière 3 de sorte à en obturer l'ouverture.

L'élément 10 est constitué d'un granulat de caoutchouc (particules d'environ 5 mm) et d'un liant en polyuréthane (par exemple le produit STOBIELAST S131.98 de SNAD), avec pour 1 kg de granulat, 150 g de liant. Après malaxage dans un malaxeur à axe vertical, le mélange est appliqué à la truelle sur le grillage préalablement fixé à la gouttière, et tassé en une couche de 1 à 4 cm. Les éléments ainsi obtenus ont une masse nettement inférieure à celle d'un bloc préformé.

Ce dispositif permet de solidariser la gouttière à la toiture, d'empêcher également les feuilles et végétaux d'encombrer les conduites, chéneaux, gouttières. Il n'est désormais plus nécessaire de procéder à des opérations d'entretien délicates et fréquentes.

## Revendications

1. Dispositif de lutte contre la prolifération des larves aquatiques dans les réceptacles susceptibles de retenir de l'eau stagnante, lesdits réceptacles (1) comportant une paroi (2) délimitant une cavité (3) et une ouverture béante (4), le dispositif comprenant un élément (10) dont la forme est apte à épouser en totalité ou en partie celle de la paroi (2) de ladite cavité et à obturer ladite ouverture, ledit élément étant réalisé en un matériau poreux perméable à l'air et à l'eau, **caractérisé en ce que** le matériau comprend un granulat de caoutchouc et un liant synthétique.

2. Dispositif selon la revendication 1, **caractérisé en ce que** ledit matériau est un agglomérat à porosité ouverte constitué de particules de caoutchouc liées par une résine polyuréthane.

3. Dispositif selon la revendication 1 ou 2, **caractérisé en ce que** le liant est une résine polyuréthane apportée à raison de 5 % à 20 % en masse rapportée au granulat de caoutchouc.

4. Dispositif selon l'une des revendications précédentes, **caractérisé en ce que** le granulat est constitué de particules de caoutchouc dont la taille va de 1 mm à 20 mm.

5. Dispositif selon l'une quelconque des revendications précédentes, **caractérisé en ce que** ledit élément (10) est préformé selon une forme apte à épouser en totalité la paroi (2) de la cavité (3), de manière à obturer entièrement le réceptacle (1).

6. Dispositif selon l'une des revendications 1 à 4, **caractérisé en ce que** l'élément (10) est préformé selon une forme apte à épouser en partie la paroi (2) de la cavité (3), au moins un évidement (5) traversant étant ménagé dans la partie inférieure dudit élément de sorte à favoriser la circulation de l'eau collectée après qu'elle a traversé ledit élément.

7. Dispositif selon l'une des revendications 1 à 4, **caractérisé en ce que** l'élément (10) est préformé selon une forme apte à épouser en partie la paroi (2) de la cavité (3) et à coopérer avec des moyens de support (13) dont la paroi de ladite cavité est dotée de manière à ménager au fond du réceptacle (1) un espace collecteur recevant l'eau après qu'elle a traversé ledit élément.

8. Dispositif selon l'une des revendications 1 à 4, **caractérisé en ce qu'**il comprend un treillis (6) apte à être fixé à la paroi (2) de la cavité (3) ou à proximité de celle-ci et un élément (10) appliqué à la surface dudit treillis et s'étendant jusqu'à la paroi de ladite cavité de sorte à en obturer l'ouverture (4).

9. Dispositif selon la revendication précédente, **caractérisé en ce que** l'élément (10) est une couche continue d'agglomérat poreux à porosité ouverte, d'épaisseur variable, comprise entre 1 cm et 4 cm.

10. Dispositif selon l'une des revendications 8 ou 9, **caractérisé en ce que** le treillis (6) est un grillage en métal ou en matière plastique comportant des mailles de 3 mm à 8 mm.

11. Dispositif selon l'une quelconque des revendications précédentes, **caractérisé en ce que** l'élément (10) comprend en outre un ou plusieurs des moyens suivants :
- des moyens pour le maintenir en place,
- des moyens de préhension,
- une armature de renfort interne,
- des moyens de renfort externes.

12. Procédé de lutte contre la prolifération des larves aquatiques dans les réceptacles (1) susceptibles de retenir de l'eau stagnante, lesdits réceptacles comportant une paroi (2) délimitant une cavité (3) et une ouverture béante (4), **caractérisé en ce qu'**il comprend les étapes consistant à :
- préparer un mélange d'un granulat de caoutchouc et d'un liant synthétique,
- couler ledit mélange dans un moule de conformation souhaitée, identique en totalité ou en partie à celle de la paroi de ladite cavité, pour obtenir après démoulage un élément en matériau perméable à l'air et à l'eau selon l'une des revendications 1 à 7 ou 11, dont la forme épouse en totalité ou en partie celle de la paroi de ladite cavité et obture ladite ouverture, et
- placer ledit élément dans ledit réceptacle.

13. Procédé de lutte contre la prolifération des larves aquatiques dans les réceptacles (1) susceptibles de retenir de l'eau stagnante, lesdits réceptacles comportant une paroi (2) délimitant une cavité (3) et une ouverture béante (4), **caractérisé en ce qu'**il comprend les étapes consistant à :
- préparer un mélange d'un granulat de caoutchouc et d'un liant synthétique,
- fixer un treillis (6) à la paroi (2) de la cavité (3) ou débordant à proximité de celle-ci,
- appliquer une couche continue dudit mélange sur le treillis jusqu'à la paroi de ladite cavité ou débordant à proximité, pour obtenir un élément (10) en matériau perméable à l'air et à l'eau à la surface dudit treillis obturant l'ouverture de ladite cavité, selon l'une des revendications 1 à 4 ou 8 à 11.

## Patentansprüche

1. Vorrichtung zur Bekämpfung der Verbreitung von Wasserlarven in Tanks, die stehendes Wasser enthalten können, wobei diese Tanks (1) eine Wand (2) aufweisen, die einen Hohlraum (3) und eine klaffende Öffnung (4) abgrenzt, wobei die Vorrichtung ein Element (10) umfasst, dessen Form sich ganz oder partiell der Form der Wand (2) dieses Hohlraums anschmiegen und diese Öffnung abdichten kann, und wobei dieses Element aus einem wasser- und luftdurchlässigen porösen Materiel hergestellt ist, **dadurch gekennzeichnet, dass** das Material ein Gummigranulat und ein synthetisches Bindemittel enthält.

2. Vorrichtung nach Anspruch 1, **dadurch gekennzeichnet, dass** das Material ein Agglomerat mit offener Porosität ist, das aus Gummipartikeln besteht, die durch ein Polyurethanharz miteinander verbunden sind.

3. Vorrichtung nach Anspruch 1 oder 2, **dadurch gekennzeichnet, dass** das Bindemittel ein Polyurethanharz ist, das mit einem Massenanteil von 5 bis 20 % zum Gummigranulat hinzugefügt wird.

4. Vorrichtung nach einem der vorausgehenden Ansprüche, **dadurch gekennzeichnet, dass** das Granulat aus Gummipartikeln mit einer Größe von 1 bis 20 mm besteht.

5. Vorrichtung nach einem der vorausgehenden Ansprüche, **dadurch gekennzeichnet, dass** das Element (10) gemäß einer Form, die sich der Wand (2) des Hohlraums (3) komplett anschmiegen kann, derart vorgeformt ist, dass der Tank (1) vollständig abgedichtet wird.

6. Vorrichtung nach einem der Ansprüche 1 bis 4, **dadurch gekennzeichnet, dass** das Element (10) gemäß einer Form, die sich der Wand (2) des Hohlraums (3) teilweise anschmiegen kann - zumindest einer durchgehenden Aussparung (5), die im unteren Abschnitt des Elements eingearbeitet ist - derart vorgeformt ist, dass es die Zirkulation des angesammelten Wassers nach dessen Durchlaufen dieses Elements begünstigt.

7. Vorrichtung nach einem der Ansprüche 1 bis 4, **dadurch gekennzeichnet, dass** das Element (10) gemäß einer Form vorgeformt ist, die sich der Wand (2) des Hohlraums (3) teilweise anschmiegen und mit den Haltemitteln (13) zusammenwirken kann, mit denen die Wand des Hohlraums ausgestattet ist, sodass am Boden des Tanks (1) ein Auffangraum für das Wasser entsteht, nachdem es dieses Element durchquert hat.

8. Vorrichtung nach einem der Ansprüche 1 bis 4, **dadurch gekennzeichnet, dass** sie ein Gitter (6) umfasst, das an der Wand (2) des Hohlraums (3) bzw. in seiner Nähe befestigt werden kann, sowie ein an der Oberfläche des Gitters angebrachtes Element (10), das sich derart bis zur Wand des Hohlraums erstreckt, dass seine Öffnung (4) abgedichtet wird.

9. Vorrichtung nach vorausgehendem Anspruch, **dadurch gekennzeichnet, dass** das Element (10) eine durchgehende Schicht aus einem porösen Agglomerat mit offener Porosität und variabler Dicke zwischen 1 und 4 cm ist.

10. Vorrichtung nach einem der Ansprüche 8 oder 9, **dadurch gekennzeichnet, dass** das Gitter (6) ein Metall- oder Kunststoffgitter ist, das 3 bis 8 mm große Maschen aufweist.

11. Vorrichtung nach einem der vorausgehenden Ansprüche, **dadurch gekennzeichnet, dass** das Element (10) zudem ein oder meherere der folgenden Mittel umfasst:
- Mittel, um es zu befestigen,
- Mittel, um es zu ergreifen,
- ein internes verstärkendes Tragwerk
- externe verstärkende Mittel.

12. Verfahren zur Bekämpfung der Verbreitung von Wasserlarven in Tanks (1), die stehendes Wasser enthalten können, wobei diese Tanks eine einen Hohlraum (3) und eine klaffende Öffnung (4) abgrenzende Wand (2) umfassen, **dadurch gekennzeichnet, dass** es folgende Schritte umfasst:
- Vorbereitung einer Mischung aus einem Gummigranulat und einem synthetischen Bindemittel,
- Formguss dieser Mischung in eine gewünschte Form, die vollständig oder teilweise der Form der Wand des Hohlraums entspricht, um nach dem Entformen ein Element aus einem luft- und wasserdurchlässigen Material nach einem der Ansprüche 1 bis 7 oder 11 zu erzielen, dessen Form vollständig oder teilweise der Form der Wand des Hohlraums entspricht und die Öffnung abdichtet, und
- Anordnung dieses Elements in dem Tank.

13. Verfahren zur Bekämpfung der Verbreitung von Wasserlarven in Tanks (1), die stehendes Wasser enthalten können, wobei diese Tanks eine einen Hohlraum (3) und eine klaffende Öffnung (4) abgrenzende Wand (2) umfassen, **dadurch gekennzeichnet, dass** es folgende Schritte umfasst:
- Vorbereitung einer Mischung aus einem Gummigranulat und einem synthetischen Bindemittel,
- Befestigen eines Gitters (6) an der Wand (2) des Hohlraums (3) bzw. in ihrer Nähe überstehend,
- Auftragen einer durchgehenden Schicht dieser Mischung auf das Gitter bis zur Wand des Hohlraums bzw. in ihrer Nähe überstehend, um ein Element (10) nach einem der Ansprüche 1 bis 4 bzw. 8 bis 11 aus einem luft- und wasserdurchlässigen Material an der Oberfläche des Gitters zu erzielen, das die Öffnung des Hohlraums abdichtet.

## Claims

1. A device for combating the proliferation of aquatic larvae in receptacles liable to hold stagnant water, said receptacles (1) comprising a wall (2) delimiting a cavity (3) and a gaping opening (4), the device comprising an element (10) the shape of which is able to match, in whole or in part, that of the wall (2) of said cavity and to close off said opening, said element being produced from a porous material permeable to air and water, **characterised in that** the material comprises a rubber aggregate and a synthetic binder.

2. The device according to claim 1, **characterised in that** said material is an open-porosity agglomerate comprising rubber particles bound by a polyurethane resin.

3. The device according to claim 1 or 2, **characterised in that** the binder is a polyurethane resin added to the extent of 5% to 20% by mass with respect to the rubber aggregate.

4. The device according to any of the preceding claims, **characterised in that** the aggregate consists of rubber particles with a size ranging from 1 mm to 20 mm.

5. The device according to any of the preceding claims, **characterised in that** the element (10) is preformed in a shape able to completely match the wall (2) of the cavity (3), so as to entirely close off the receptacle (1).

6. The device according to any of claims 1 to 4, **characterised in that** the element (10) is preformed in a shape able to partly match the wall (2) of the cavity (3), at least one through recess (5) being provided in the bottom part of said element so as to assist the circulation of the water collected after it has passed through said element.

7. The device according to any of claims 1 to 4, **characterised in that** the element (10) is preformed in a shape able to partly match the wall (2) of the cavity (3), and to cooperate with support means (13) with which the wall of said cavity is provided so as to provide at the bottom of the receptacle (1) a collecting space receiving the water after it has passed through said element.

8. The device according to any of claims 1 to 4, **characterised in that** it comprises a lattice (6) able to be fixed to the wall (2) of the cavity (3) or in the vicinity thereof and an element (10) applied to the surface of said lattice and extending as far as the wall of said cavity so as to close off the opening (4) thereof.

9. The device according to the preceding claim, **characterised in that** the element (10) is a continuous layer of porous agglomerate with open porosity and a variable thickness of between 1 cm and 4 cm.

10. The device according to either of claims 8 or 9, **characterised in that** the lattice (6) is a metal or plastic grid comprising 3 mm to 8 mm meshes.

11. The device according to any of the preceding claims, **characterised in that** the element (10) further comprises one or more of the following means:
- means for holding it in place,
- gripping means,
- an internal reinforcement grid,
- external reinforcement means.

12. A method for combating the proliferation of aquatic larvae in receptacle (1) liable to hold stagnant water, said receptacles comprising a wall (2) delimiting a cavity (3) and a gaping opening (4), **characterised in that** it comprises the steps consisting of:
- preparing a mixture of a rubber aggregate and a synthetic binder,
- pouring said mixture into a mould of required conformation, completely or partly identical to that of the wall of said cavity, in order to obtain, after removal from the mould, an element made from material permeable to air and water according to any of claims 1 to 7 or 11, the shape of which completely or partly matches that of the wall of said cavity and closes off said opening, and
- placing said element in said receptacle.

13. A method for combating the proliferation of aquatic larvae in receptacles (1) liable to hold stagnant water, said receptacles comprising a wall (2) delimiting a cavity (3) and a gaping opening (4), **characterised in that** it comprises the steps:
- preparing a mixture of a rubber aggregate and a synthetic binder,
- fixing a lattice (6) to the wall (2) of the cavity (3) or projecting in the vicinity thereof,
- applying a continuous layer of said mixture to the lattice as far as the wall of said cavity or projecting in the vicinity, in order to obtain an element (10) made from material permeable to air and water on the surface of said lattice closing off the opening of said cavity, according to any of claims 1 to 4 or 8 to 11.
